(19) Europäisches Patentamt
European Patent Office
Office européen des brevets

(11) **EP 2 840 882 B1**

(12) # EUROPEAN PATENT SPECIFICATION

(45) Date of publication and mention of the grant of the patent:
**07.03.2018 Bulletin 2018/10**

(21) Application number: **13787426.9**

(22) Date of filing: **23.04.2013**

(51) Int Cl.:
***A01C 1/02*** *(2006.01)*     ***G01N 13/02*** *(2006.01)*
***A01C 1/00*** *(2006.01)*

(86) International application number:
**PCT/IB2013/053213**

(87) International publication number:
**WO 2013/168038 (14.11.2013 Gazette 2013/46)**

(54) **PROCESSING SEEDS BY COLD PLASMA TREATMENT TO REDUCE AN APPARENT CONTACT ANGLE OF SEEDS COAT SURFACE**

VERARBEITUNG VON SAMEN DURCH KALTPLASMABEHANDLUNG ZUR REDUZIERUNG EINES SCHEINBAREN RANDWINKELS DER SAMENBESCHICHTUNGSFLÄCHE

TRAITEMENT DE SEMENCES PAR TRAITEMENT DE PLASMA FROID POUR RÉDUIRE UN ANGLE DE CONTACT APPARENT DE SURFACE D'ENVELOPPE DE SEMENCES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.04.2012 US 201261636752 P**

(43) Date of publication of application:
**04.03.2015 Bulletin 2015/10**

(73) Proprietor: **Ariel-University Research And Development Company, Ltd.**
**40700 Ariel (IL)**

(72) Inventors:
• **BORMASHENKO, Edward**
 **40700 Ariel (IL)**
• **GRYNYOV, Roman**
 **4076437 Ariel (IL)**
• **BORMASHENKO, Yelena**
 **40700 Ariel (IL)**
• **DRORI, Elyashiv**
 **44830 Shilo (IL)**

(74) Representative: **Harrison IP Limited**
**3 Ebor House**
**Millfield Lane**
**Nether Poppleton, York YO26 6QY (GB)**

(56) References cited:
**EP-A2- 0 705 531     WO-A1-2007/124945**
**CN-A- 1 914 972     US-A- 5 281 315**
**US-B1- 6 543 460**

• **SERA BOZENA ET AL.: 'Influence of Plasma Treatment on Wheat and Oat Germination and Early Growth.' IEEE TRANSACTIONS ON PLASMA SCIENCE vol. 38, no. 10, 31 October 2010, pages 2963 - 2968, XP011316653**
• **VOLIN JOHN ET AL.: 'Modification of seed germination performance through cold plasma chemistry technology' CROP SCIENCE vol. 40, no. 6, 30 November 2000, pages 1706 - 1718, XP055173062**
• **ZIVKOVIC ET AL.: 'The stimulatory effect of non-equilibrium (low temperature) air plasma pretreatment on light-induced germination of Paulownia tomentosa seeds' SEED SCIENCE AND TECHNOLOGY vol. 32, no. 3, 01 October 2004, pages 693 - 701, XP008175232**

## Description

RELATED APPLICATION

The present application gains priority from U.S. Provisional Patent Application No. 61/636,752 filed 23 April 2012.

FIELD AND BACKGROUND OF THE INVENTION

The invention, in some embodiments, relates to the field of agriculture and food science, and more particularly to methods for processing seeds that, in some embodiments, increase the utility thereof.

There is often a need to germinate seeds.

In the field of agriculture, seeds are sown in a growth medium, typically an open field, a greenhouse or a vessel containing soil (geoponics) or a water/nutrient mix with or without an inert support medium (hydroponics and aeroponics). When water in the growth medium contacts the seeds, germination starts and the seeds eventually sprout forming seedlings. The percentage of the sown seeds that germinate is the germination rate. The germination rate is usually less than 100%, meaning that an excess of seeds must be sown to provide a desired yield of plants.

In the field of edible products and the culinary arts, seeds are germinated and then used for the production of various food stuffs and edible additives including malted grain (e.g., for preparing beer, whiskey, malted vinegar), wheatgrass, breads such as Essene bread or edible sprouts (e.g., of pulses, cereals, oils seeds, brassica, umbelliferous vegetables, allium and other vegetables and herbs). Unsprouted seeds (due to less than 100% germination rate) are wasted and may lead to fungal growth or an inferior final product.

In the field of the culinary arts, dry seeds are often rehydrated before use, especially but not exclusively, legumes such as beans, lentils, peas and chickpeas. Rehydration is relatively slow and requires the use of excess water. Although not necessarily a significant issue in small-scale (home) cooking, in industrial settings the time and water required for rehydration may constitute a significant cost in the preparation of a food based on rehydrated seeds.

Volin JC, Denes FS, Young RA, Park SMT "Modification of seed germination performance through cold plasma chemistry technology", Crop. Sci. 2000, 40, 1706-1718 disclose treatment of radish, pea, corn, soybean and bean with cold radiofrequency plasma to modify seed properties, the plasma generated by a 1000W 13.56 MHz radiofrequency field in an atmosphere of various gases.

Volin et al report that plasma treatment in a $CF_4$ atmosphere led to formation of a layer on radish and pea seeds that resulted in a significant delay of germination compared to non-treated seeds. Plasma treatment in an octadecafluorodecalin atmosphere led to formation of a layer on soybean, corn and pea that resulted in a significant delay of germination compared to non-treated seeds.

Volin et al also report that plasma treatment for 5 minutes in a 150 mT (9.4 or 20 Pa) cyclohexane atmosphere of soybean (but not corn) led to accelerated germination. Plasma treatment for 20 minutes in a 200 mT (27 Pa) hydrazine atmosphere of corn led to accelerated germination. Plasma treatment for 20 minutes in a 200 mT (27 Pa) aniline atmosphere of corn and soybean led to accelerated germination.

Cyclohexane ($C_6H_{12}$, MW = 84) is extremely flammable (flash point -20°C), narcotic by inhalation and may cause skin irritation.

Hydrazine ($N_2H_4$, MW = 32) is highly reactive, highly toxic (LD50 ~60mg/kg oral in rats and mice), flammable and unstable (autoignition at 24 to 270°C, flash point 52°C, explosive at 1.8%) and corrosive.

Aniline ($C_6H_5NH_2$, MW = 93) is offensive-smelling, flammable (flash point 70°C), is toxic by inhalation (LC50 175ppm 7 hours mice) and is expected to be very toxic to terrestrial and aquatic life when released in the environment (EC50/48-hours <1mg/l daphnia).

U.S. Patent No. 5,281,315 describes teaches a low-temperature plasma treatment of seeds, using a high frequency (i.e., 1-40 MHz) glow discharge at a pressure of 0.1-5 torr. The effect is said to be mediated primarily by free electrons which promote formation of neutral reactive species such as $O_3$, atomic oxygen, singlet oxygen and nitrogen oxide.

U.S. Patent No. 6,543,460 describes cold-plasma treatment of seeds to remove surface materials such as fungicides, insecticides, or infectious organisms. Treatment with plasma for 15-30 minutes at a pressure of 600 millitorr exemplified therein.

International Patent Application Publication WO 2007/124945 describes a method and device for treating seeds with atmospheric pressure plasma, thereby removing harmful substances such as pathogens.

SUMMARY OF THE INVENTION

The invention, in some embodiments, relates to a method for processing seeds according to claim 1.

There is provided a method of treating plant seeds comprising:

providing a plant seed (20) having a seed coat with an outer surface having a natural water apparent contact angle; and exposing said plant seed (20) to an inductively-coupled plasma under conditions effective to substantially reduce the water apparent contact angle of said seed coat surface from said natural water apparent contact angle to a treated water apparent contact angle, wherein said water apparent contact angle is reduced by not less than about 10°, and

wherein said seed (20) is exposed to said plasma in a chamber (12) including an atmosphere from which said plasma is generated, wherein a pressure of said atmosphere in said chamber (12) is not more than 10 Pa, and said seed (20) is exposed to said plasma for not more than 2 minutes.

The apparent contact angle of the seed coat surface is reduced by not less than about 10°, so that the treated apparent contact angle is not less than about 10° lower than the natural contact angle.

In some embodiments, the exposing of the plant seed to the plasma is such that the treated apparent contact angle is less than 90° (hydrophilic). In some such embodiments, the natural apparent contact angle is greater than 90° (hydrophobic), so that an initially hydrophobic seed coat surface becomes hydrophilic.

In some embodiments, the plasma comprises a cold radiofrequency plasma. In some such embodiments, the plasma is generated by a radiofrequency field having a frequency of not less than about 100 kHz and even not less than about 1 MHz. In some such embodiments, the plasma is generated by a radiofrequency field having a frequency of not more than about 100 MHz.

In some embodiments, the seed is exposed to the plasma for not less than about 1 second. In some embodiments, the seed is exposed to the plasma for not more than about 60 minutes. In some embodiments, the seed is exposed to the plasma for not more than about 1 minute.

In some embodiments, the seed is exposed to the plasma in a chamber including an atmosphere from which the plasma is generated.

The pressure of the atmosphere in the chamber is not more than about 10 Pa.

In some embodiments, the weight percent of organic carbon in the atmosphere is not more than about 70%.

In some embodiments, the atmosphere comprises a gas selected from the group of gases consisting of air, oxygen, nitrogen, argon and neon and mixtures thereof.

In some embodiments, the method further comprises: subsequent to the exposure to plasma, contacting the seed with water.

In some such embodiments, the contacting with water is under conditions allowing the seed to germinate.

In some embodiments, the method further comprises: planting the seed.

In some embodiments, the method further comprises: subsequent to the exposure to plasma, waiting a period of time during which the plant seed sprouts; and subsequently preparing a foodstuff from the sprouted seed.

In some embodiments, the method further comprises: subsequent to the exposure to plasma, contacting the plant seed with water for rehydration of the seed; and subsequently preparing a foodstuff from the rehydrated seed.

Unless otherwise defined, all technical and scientific terms used herein have the same meaning as commonly understood by one of ordinary skill in the art to which the invention pertains. In case of conflict, the specification, including definitions, will take precedence.

As used herein, the terms "comprising", "including", "having" and grammatical variants thereof are to be taken as specifying the stated features, integers, steps or components but do not preclude the addition of one or more additional features, integers, steps, components or groups thereof.

As used herein, the indefinite articles "a" and "an" mean "at least one" or "one or more" unless the context clearly dictates otherwise.

As used herein, when a numerical value is preceded by the term "about", the term "about" is intended to indicate +/-10%.

## BRIEF DESCRIPTION OF THE FIGURES

Some embodiments of the invention are described herein with reference to the accompanying figures. The description, together with the figures, makes apparent to a person having ordinary skill in the art how some embodiments of the invention may be practiced. The figures are for the purpose of illustrative discussion and no attempt is made to show structural details of an embodiment in more detail than is necessary for a fundamental understanding of the invention. For the sake of clarity, some objects depicted in the figures are not to scale.

In the Figures:

FIG. 1 is a schematic depiction of the inductively-coupled plasma device used to treat seeds with plasma as described herein;
Fig. 2A is a reproduction of a SEM image (10000x) of an untreated lentil seed;

Fig. 2B is a reproduction of a SEM image (5000x) of an untreated bean seed;

Fig. 2C is a reproduction of a SEM image (10000x) of an untreated wheat seed;

Figs. 3A-3B are reproductions of images of a water droplet on the sead coat surface of an untreated lentil (Figure 3A) and a treated lentil (Figure 3B);

Figs. 4A-4D are reproductions of images of a water droplet on the seed coat surface of an untreated lentil held at different angles, demonstrating the "rose petal" effect;

Figs. 5A-5B are reproductions of images of a water droplet on the seed coat surface of an untreated bean (Figure 5A) and a treated bean (Figure 5B);

Figs. 6A-6B are reproductions of images of a water droplet on the seed coat surface of an untreated wheat seed (Figure 6A) and a treated wheat seed (Figure 6B);

Figs. 7A-7C are graphs comparing water absorption as a function of time of treated and untreated beans (Figure 7A), treated and untreated lentils (Figure 7B) and treated and untreated wheat seeds (Figure 7C); and

Figs. 8A-8C are graphs comparing germination of treated and untreated beans (Figure 8A), treated and untreated lentils (Figure 8B) and treated and untreated wheat seeds (Figure 8C).

DESCRIPTION OF SOME EMBODIMENTS OF THE INVENTION

The invention, in some embodiments, relates to a method for processing seeds according to claim 1.

As discussed in the introduction, the germination rate of a given type of seed is typically significantly less than 100%, meaning that an excess of seeds must be sown or used to achieve a desired effect or product. In some instances, a large amount of water and/or long time is required to hydrate seeds, in some instances, to initiate germination. In some instances, the presence of non-germinated seeds may negatively affect the quality of a product.

*Treating plant seeds with plasma*

According to an aspect of some embodiments of the teachings herein, there is provided a method of treating plant seeds, comprising:

providing a plant seed (preferably an ungerminated, viable plant seed) having a seed coat (preferably an intact seed coat) having a natural apparent contact angle; and

exposing the plant seed to a plasma (an ionized gas) under conditions effective to substantially reduce the apparent contact angle of the seed coat surface from the natural apparent contact angle to a treated apparent contact angle (increasing the wettability by water of the seed coat surface).

As used herein, by the term "viable plant seed" is meant a plant seed that under proper conditions germinates. As discussed in greater detail hereinbelow, in some embodiments, exposing the plant seeds to the plasma increases the germination rate of the plant seed.

In some embodiments, the apparent contact angle of the seed coat surface is reduced by not less than about 10°, not less than about 20°, not less than about 30° and even not less than about 40°. In some embodiments, the reduction of apparent contact angle of the seed coat surface is such that a hydrophobic seed coat surface (having a natural apparent contact angle greater than 90°) becomes hydrophilic (having an apparent contact angle less than 90°).

In some embodiments, the plant seed is treated to neutralize pathogens prior to the exposure to the plasma. In some embodiments, the plant seeds are treated to neutralize pathogens subsequent to the exposure to the plasma. In some embodiments, the plant seeds are used without such treatment to neutralize pathogens.

The teachings herein are applicable to any suitable seed typeof plant, including vegetable seeds, grass seeds, oil seeds and grain seeds. That said, in some embodiments the seed is of legumes (*Fabaceae*) such as alfalfa, carobs, chickpea (*Cicer arietinum*), clovers, fenugreek, lupins, mung beans, peas (*Pisum sativum*), soybeans *(Glycine max)* and vetches, but especially seeds of the genus *Phaseolus, vigna* and lentils (L*ens culinaris*). In some embodiments the seed is *Poaceae,* such as *Panicoideae* such as maize, sorghum, sugarcane, millet; *Ehrhartoideae* such as rice; *Avena* such as oats; and *Pooideae* such as lawn grass, pasture grass and *Triticeae,* such as *Hordeum* (barley), *Secale* (rye) and especially *Triticum* (wheat, including kamut). Other suitable types of seeds include oil seeds (almond, hazelnut, linseed, peanut, sesame, sunflower), Brassica (arugula, broccoli, cabbage, daikon, mizuna, mustard, radish, tatsoi, turnip, watercress), umbelliferous vegetables (carrot, celery, fennel, parsley), allium (garlic, green onion, leek, onion), solanaceae (tomato, potato, paprika, aubergine or eggplant) and other edible plants such as amaranth, buckwheat, lettuce, maize, milk thistle, quinoa, rhubarb and spinach.

It has been found that exposure of plant seeds to plasma according to the teachings herein has one or more unexpected advantages.

In some embodiments, exposure of seeds to plasma according to the teachings herein eases rehydration of seeds, allows reduction of the amount of water used and time required for rehydrating seeds, for example in the field of industrial and culinary food-preparation. Without wishing to be held to any one theory, the Inventors currently believe that this effect is possibly attributable to the reduction of apparent contact angle of the surface of the seed coat.

In some embodiments, exposure of a seed to plasma according to the teachings herein increases the germination rate of the seed, that is to say, increases the chance that a given thus-exposed seed will subsequently germinate in suitable conditions, both for agricultural uses (e.g., planting) and for culinary uses (e.g., for malting, production of food stuff such as edible sprouts or Essene bread), with the concomitant advantages that such increased germination rate provides.

In some embodiments, exposure of a seed to plasma according to the teachings herein provides a quicker onset of germination and shorter "time window" during which a batch of treated seeds germinate. In some embodiments, such improved control is advantageous in agriculture, in the culinary arts, or in the food industry.

In some embodiments, exposure of a seed to plasma according to the teachings herein allows reduction of the amount of water used for germinating seeds, in some embodiments for agricultural purposes and in some embodiments for culinary or food industry uses.

These advantages are especially surprising in light of the teachings of Selcuk M, Oksuz L, Basaran P "Decontamination of grains and legumes infected with Aspergillus spp. and Penicillum spp. by cold plasma treatment" Bioresource Technology 2008, 99, 5104-5109 that disclose no improvement (and perhaps worsening) in germination and rehydration as a result of plasma treatment. Without wishing to be held to any one theory, it is currently believed that plasma treatment in accordance with the teachings of Selcuk does not substantially reduce the apparent contact angle of the surface of a seed coat.

*Duration*

The seed is exposed to a plasma for any suitable duration. In some embodiments, the seed is exposed to a plasma for not less than about 1 second. All things being equal, it is currently believed that shorter duration exposure allows saving in energy used to generate the plasma and allows greater throughput of the treatment. That said, it is also believed that exposure of plant seeds to a plasma for an excessive period of time (e.g., in some embodiments longer than 5 minutes) may cause damage or yield suboptimal results. Accordingly, in some embodiments a seed is exposed to a plasma for a short time, e.g., not more than about 2 minutes, not more than about 1 minute, not more than about 30 seconds, less than 30 seconds and even not more than about 20 seconds.

*Type of Plasma*

In some embodiments, the plasma to which the seed is exposed is cold plasma, for example inductively coupled plasma, for example generated using a radiofrequency current, that is to say, the plasma is a cold radiofrequency glow discharge plasma (also called herein, radiofrequency plasma, using a radiofrequency glow discharge plasma source). In such embodiments, any suitable radiofrequency field having any suitable frequency is used to generate the plasma. In some embodiments, the plasma is generated by a radiofrequency field having a frequency of not less than about 100 KHz, not less than about 250 kHz, not less than about 500 kHz, not less than about 1 MHz, not less than about 3 MHz and even not less than about 5 MHz. In some embodiments, the plasma is generated by a radiofrequency field having a frequency of not more than about 100 MHz. In some embodiments, the plasma is generated by a radiofrequency field having a frequency of not more than about 80 MHz, not more than about 50 MHz, not more than about 20 MHz, and even not more than about 15 MHz. In some embodiments, the plasma is generated by a radiofrequency field having a frequency of between about 1 MHz and about 15 MHz, and even between about 5 MHz and about 14 MHz., for example about 10 MHz or about 13.56 MHz

In some embodiments, other suitable methods and plasma-generating devices are used to generate the cold plasma. In some embodiments, the method of generating the plasma is selected from the group consisting of electron cyclotron resonance (using an electron cyclotron resonance plasma source); corona discharge plasma (using a corona discharge plasma source), atmospheric arc plasma (using an atmospheric arc plasma source, "plasma spray torch"), vacuum arc plasma (using a vacuum arc plasma source), laser-generated plasma (using a laser plasma source). Details of various plasma sources are known in the art (see for example, Chu PK, Chen JY, Wang LP, Huang N "Plasma-surface modification of biomaterials" Mat Sci and Eng 2002, R36, 143-206)

*Atmosphere*

In some embodiments, the seed is exposed to a plasma generated by radiofrequency glow discharge plasma in a chamber including an atmosphere of gas from which the plasma is generated.

Radiofrequency glow discharge plasma is typically divided into low-pressure (between about $0.133Pa$ ($10^{-3}$

Torr) and 133 Pa (1 Torr)) and medium-pressure (between 133 Pa and 13300 Pa (100 Torr), where the electron density in the generated plasma increases with higher pressure.

In some embodiments it has been found that superior results are achieved at very low pressures, that is to say not more than about 10 Pa, not more about than about 8 Pa, not more than about 5 Pa and even not more about than 2 Pa. Although not wishing to be held to any one theory, it is believed that in some embodiments, the electron density of the plasma at such very low pressures results in superior results.

In some embodiments, the atmosphere comprises a gas selected from the group of gases consisting of air, oxygen, nitrogen, argon and neon and mixtures thereof. In some embodiments, the atmosphere consists essentially of a gas selected from the group of gases consisting of air, oxygen, nitrogen, argon and neon and mixtures thereof. In some embodiments, the atmosphere consists of a gas selected from the group of gases consisting of air, oxygen, nitrogen, argon and neon and mixtures thereof.

In some embodiments, the atmosphere is substantially air. In some embodiments, the atmosphere is air.

In some embodiments, the atmosphere comprises oxygen ($O_2$). In some embodiments, the molar percent of oxygen in the atmosphere is not less than about 0.1%, not less than about 1%, not less than about 5%, not less than about 10% and even not less than about 20% oxygen.

In some embodiments, the atmosphere comprises nitrogen ($N_2$). In some embodiments, the molar percent of nitrogen in the atmosphere is not less than about 0.1%, not less than about 1%, not less than about 5%, not less than about 10% and even not less than about 20% nitrogen.

In some embodiments, the atmosphere comprises oxygen together with an inert gas (e.g., $N_2$, Ne, Ar, He or mixtures thereof). In some embodiments, the molar percent of the oxygen and the inert gas together comprises not less than about 5%, not less than about 10%, not less than about 20%, not less than about 40%, not less than about 60%, not less than about 80%, and even not less than about 95% of the atmosphere.

In some embodiments, the atmosphere comprises an inert gas (e.g., $N_2$, Ne, Ar, He and mixtures thereof) and includes less than 0.1% molar percent) of oxygen.

In some embodiments, the weight percent of organic carbon (weight percent of carbon in hydrocarbon molecules making up the atmosphere) in the atmosphere is not more than about 70%, not more than about 50%, not more than about 25%, not more than about 15%, not more than about 10%, not more than about 5%, not more than about 4% and even not more than about 2%. In some embodiments, the atmosphere includes not more than about 1% and even not more than about 0.1% molar percent of hydrocarbons.

In some embodiments, the atmosphere is substantially not flammable. In some embodiments, the atmosphere is substantially devoid of a flammable component such as hydrazine or cyclohexane.

In some embodiments, the atmosphere is substantially devoid of a toxic component such as hydrazine or aniline.

*Plant seeds treated with plasma*

It is currently believed that some embodiments of the seeds according to the teachings herein are more susceptible than naturally occurring seeds of the same type to pathogens as a result of the reduced hydrophobicity of the seed coat surface. Accordingly, in some embodiments, the plant seeds are treated, before or after exposure to the plasma as described above, to neutralize pathogens such as fungus and fungal spores, bacteria and/or viruses, for example, by exposure to a chemical agent such as ethylene oxide or hydrogen peroxide (using the dry sterilization process).

In some embodiments, by substantially lower is meant that the apparent contact angle of the seed coat surface is not less than about 10°, not less than about 20°, not less than about 30° and even not less than about 40° lower than the natural apparent contact angle of a seed coat surface of the type of plant.

In some embodiments, the seed coat surface is hydrophilic, having an apparent contact angle of less than 90°. In some such embodiments, the plant seed is of a type of plant with a naturally hydrophobic seed coat surface having a natural apparent contact angle of greater than 90°. Accordingly, in some embodiments, the plant seed comprises a hydrophilic seed coat surface (apparent contact angle less than 90°) that is ordinarily (naturally) hydrophobic (apparent contact angle greater than 90°).

The seeds are of any suitable type of plant, including vegetable seeds, grass seeds, oil seeds and grain seeds. That said, in some embodiments the seeds are of legumes (*Fabaceae*) such as alfalfa, carobs, chickpea (*Cicer arietinum*), clovers, fenugreek, lupins, mung beans, peas (*Pisum sativum*), soybeans (*Glycine max*) and vetches, but especially seeds of the genus *Phaseolus, vigna* and lentils (*Lens culinaris*). In some embodiments the seeds are *Poaceae*, such as *Panicoideae* such as maize, sorghum, sugarcane, millet; *Ehrhartoideae* such as rice; *Avena* such as oats; and *Pooideae* such as lawn grass, pasture grass and *Triticeae,* such as *Hordeum* (barley), *Secale* (rye) and especially *Triticum* (wheat, including kamut). Other suitable seeds include oil seeds (almond, hazelnut, linseed, peanut, sesame, sunflower), Brassica (arugula, broccoli, cabbage, daikon, mizuna, mustard, radish, tatsoi, turnip, watercress), umbelliferous vegetables (carrot, celery, fennel, parsley), allium (garlic, green onion, leek, onion), solanaceae (tomato, potato, paprika, aubergine or eggplant) and other edible plants such as amaranth, buckwheat, lettuce, maize, milk thistle, quinoa, rhubarb and spinach.

For example, in some embodiments, the seed is a lentil (*Lens culinaris*) seed having a seed coat surface with an apparent contact angle of not more than about 115°, not more than about 105°, not more than about 90°, not more than about 70°, not more than about 50° and even not more than about 30°. The natural apparent contact angle of a lentil seed coat surface is 127±2°.

For example, in some embodiments, the seed is a white bean (*Phaseolus vulgaris*) having a seed coat surface with an apparent contact angle of not than about 90°, not more than about 80°, not more than about 70°, not more than about 60° and even not more than about 55°. The natural apparent contact angle of a white bean seed coat surface is 98±2°

For example, in some embodiments, the seed is a wheat (*Triticum spp.*) seed having a seed coat surface with an apparent contact angle of not more than about 95°, not more than about 90°, not more than about 80°, not more than about 60°, not more than about 40° and even not more than about 20°. The natural apparent contact angle of a wheat seed coat surface is 115±2°.

*Uses of plant seeds treated with plasma*

As noted above, some embodiments of the plasma treatment of seeds in accordance with the teachings herein have a number of unexpected advantages, in some embodiments one or more of increased germination rate, quicker onset of germination, shorter time window of germination, reduction of the amount of water required to germinate seeds, reduction of the amount of water required to rehydrate seeds, and/or reduction of the amount of time required to rehydrate seeds. Typically, subsequent to exposure to plasma in accordance with the teachings herein, a treated seed is germinated or rehydrated for further use.

Thus, in some embodiments, the method according to the teachings herein further comprises: contacting the seed with water (a term synonymous with the term "exposing the seeds to water" as used in US 61/636,752). In some embodiments, the method further comprises: contacting the seed with water under conditions allowing the seed to germinate.

In some embodiments, the method further comprises: subsequent to the exposure to plasma, planting the seed, that is to say contacting with a medium and water allowing the seed to germinate and develop into a shoot, a seedling, and optionally a mature plant. In some such embodiments, the medium is a geoponics medium (e.g., soil in a field, green house, nursery). In some such embodiments, the medium is a hydroponics or aeroponics medium. Such embodiments are useful, *inter alia*, in the field of agriculture, for example for producing seedlings, shoots and/or small plants for consumption, sale and replanting, or for growing plants for harvest (e.g., of the plant, fruit or seeds) or other use (e.g., pasture). Such embodiments are useful for producing sprouts for consumption, e.g., by humans or animals, such as of pulses (alfalfa, clover, fenugreek, lentil, pea, chickpea, mung bean, soybean), cereals (oat, wheat, maize, rice, barley, rye, kamut), Cereal-like (quinoa, amaranth, buckwheat), oilseeds (almond, hazelnut, linseed, peanut, sesame, sunflower), Brassica (arugula, broccoli, cabbage, daikon, mizuna, mustard, radish, tatsoi, turnip, watercress), umbelliferous vegetables (carrot, celery, fennel, parsley), allium (garlic, green onion, leek, onion) and other edible plants such as spinach, lettuce and milk thistle.

In some embodiments, the method further comprises: subsequent to the exposure to plasma, waiting a period of time during which the plant seed sprouts, and subsequently preparing a foodstuff from the sprouted seeds. Such embodiments are typically applied to preparation of foodstuffs that require the use of germinated seeds such as malted grain especially barley (e.g., for preparing beer, whiskey, malted vinegar, confections, malted beverages, malt extract and barley malt), wheatgrass and breads such as Essene bread and malt loaf.

In some embodiments, the method further comprises: subsequent to the exposure to plasma, contacting the plant seed with water for rehydration of the seed (e.g., by soaking), and subsequently preparing a foodstuff from the rehydrated seed. Such embodiments are typically applied to seeds that are stored dry and must be rehydrated for use (typically legumes such as lentils, beans and chickpeas) in the preparation of foodstuffs such as soups, stews and spreads (e.g., hummus).

Devices according to the teachings herein

The teachings herein may be implemented using any suitable plasma-generating device (as described above) suitable for exposing plant seeds to plasma under suitable conditions as described herein. Typically, such plasma-generating devices are instruments configured for scientific research, operable by or under the supervision of highly-skilled scientific personnel, and allowing various operation parameters to be changed and adjusted.

In some embodiments, the teachings herein are implemented using a plasma-generating device specifically configured for implementing the teachings herein. Such embodiments are typically configured for simple operation, even by an unskilled operator or where even a skilled operator is preferably not preoccupied with device settings.

In some such embodiments, the device is configured for switch operation: a user activates a control (e.g., a single button, a plurality of buttons) that leads to generation of plasma from the required type of atmosphere at the required pressure at the required radiofrequency for the required duration, without needing to set any of the parameters.

In some embodiments, the device is configured for continuous operation, that is to say, the device is configured, when activated, to substantially constantly generate plasma, to continuously feed untreated seeds to be exposed to the plasma, and to continuously extract seeds already treated by exposure to the plasma in accordance with the teachings herein. In some embodiments, the device is configured for batchwise treatment of seeds.

*Duration*

In the art, plasma-generating devices typically include an activate/deactivate switch. An operator activates the device through the switch to generate plasma, and consults a timepiece until sufficient time of plasma generation is achieved, and then deactivates the device using the switch.

In some embodiments, the device is configured so that the duration that seeds being treated by the device are exposed is limited to a duration in accordance with the teachings herein. Implementation of such limitations of duration is well within the ability of a person having ordinary skill in the art of electronics and device control upon perusal of the teachings herein, and typically includes the use of a software or hardware timer.

For example, in some embodiments, the maximal duration of exposure is limited to a predetermined maximal duration according to the teachings herein. Activation of the device through the operator-interface leads to plasma generation no longer than the predetermined maximal duration. In some such embodiments, the predetermined maximal duration is not more than about 2 minutes, not more than about 1 minute, not more than about 30 seconds, less than 30 seconds and even not more than about 20 seconds.

For example, in some such embodiments, the duration of exposure is fixed to a single predetermined value according to the teachings herein. Each activation of the device through the operator-interface causes the device to generate plasma only for the fixed single value. In some such embodiments, not more than about 2 minutes, not more than about 1 minute, not more than about 30 seconds, less than 30 seconds and even not more than about 20 seconds.

For example, in some embodiments, the duration of exposure is limited to a relatively small number of predetermined values, for example labelled in accordance to seed type to be treated. In some such embodiments, the predetermined values of duration are all not more than about 2 minutes, not more than about 1 minute, not more than about 30 seconds, less than 30 seconds and even not more than about 20 seconds.

*Locations including a plasma-generating device*

Known plasma-generating devices are useful in the field of scientific research and heavy industry and are typically found in scientific laboratories and factories. The teachings herein provide for utility of processing plant seeds for food and agriculture, teaching the utility of placing a plasma-generating device in locations where plant seeds are used for food and agriculture.

In some instances, the teachings herein are implemented in a central location, for example, a seed factory for the treatment and manufacture of seeds in accordance with the teachings herein. The treated seeds are then transported to a location for use. In some embodiments, subsequent to treatment, the treated seeds are placed in a protected environment (e.g., sealed in an inert atmosphere, preferably without water, in some embodiments subsequent to pathogen-neutralization treatment) to avoid premature germination and/or pathogen development.

In some embodiments, it is preferred to implement the teachings herein as close as possible (spatially and/or temporally) to where the treated seeds will be germinated.

For instance, the teachings herein are advantageously implemented in a kitchen (home, restaurant, cafeteria, catering establishment), for instance for preparing foodstuffs from hydrated seeds (e.g., bean, lentil, chickpeas for soup, stews and spreads like hummus) or sprouts for consumption.

For instance, the teachings herein are advantageously implemented in an industrial food-manufacturing location (e.g., a brewery, a distillery, a bakery, a food-processing plant), for instance for preparing foodstuffs from hydrated seeds (e.g., bean, lentil, chickpeas for soup, stews and spreads like hummus), sprouts for consumption, breads, and drinks such as beer and whiskey.

For instance, the teachings herein are advantageously implemented in a plant-growing location (e.g., a farm, a greenhouse, a plant nursery, a hydroponics farm, an aeroponics farm, a vertical farm), especially an industrial plant-growing location, for instance for treating plant seeds in accordance with the teachings herein, for example prior to planting or prior to being feed to animals such as livestock.

*Agricultural device*

In some embodiments in the field of agriculture, it is desirable to plant seeds as soon as possible after treatment in accordance with the teachings herein.

In some such embodiments, plant seeds are held in a seed reservoir of the agricultural device, in the usual way. When it is desired to plant the seeds, untreated seeds are feed from the seed reservoir to the plasma-generating component to be treated in accordance with the teachings herein, and subsequently are directed to the sowing-component for sowing in the usual way.

In some such embodiments, the plasma-generating component is an atmospheric-pressure plasma-generating component.

In some such embodiments, the device includes an airlock configured to transfer treated seeds from a location (e.g., chamber) where seeds are treated in accordance with the teachings herein at subatmospheric pressure to the sowing-component at atmospheric pressure.

In some embodiments, the device includes an airlock configured to transfer seeds from a seed reservoir at atmospheric pressure to a location (e.g., chamber) where seeds are treated in accordance with the teachings herein at subatmospheric pressure. In some embodiments, the seed reservoir is maintained at a subatmospheric pressure during operation of the device, typically so no airlock is required. In some embodiments, the seed reservoir is configured to be operable as a location (e.g., chamber) where seeds are treated in accordance with the teachings herein at subatmospheric pressure.

In some embodiments, the plasma-generating component of the agricultural device is limited to generating plasma suitable for implementing the teachings herein and is so configured so as not to be functional for generating plasma not suitable for implementing the teachings herein. In some embodiments, the sowing-component is selected from the group consisting of a planter (e.g., a variant of or based on a DB120 or model 1700 series), an air seeder (e.g., a variant of or based on model 740A/750A) and a seed drill (including grain drills, e.g., a variant of or based on model 1590), all by John Deere, Moline, Illinois, USA. I

EXPERIMENTAL

*Seeds*

Seeds of lentil (*Lens culinaris*), white beans (*Phaseolus vulgaris*) and wheat (*Triticum spp.*) for human consumption bearing organically-grown certification were acquired from a supermarket.

*Untreated seeds*

The surfaces of the seed coats of untreated seeds were examined using scanning electron microscope (JSM-6510LV by JEOL Ltd., Tokyo, Japan).

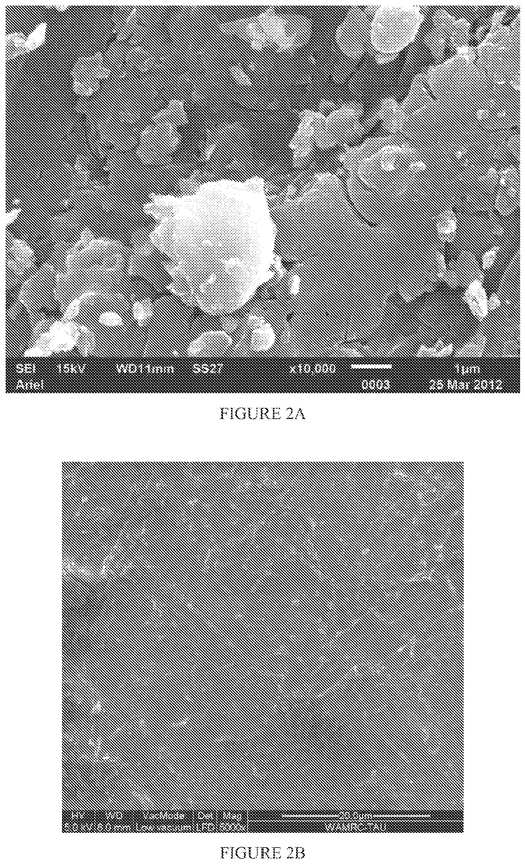

In Figure 2A, a reproduction of a SEM image (10000x, scale bar is 1 micrometer) of an untreated lentil, is seen that an untreated lentil seed coat surface is rough, comprising granules (presumably protein granules) having sizes ranges from about 0.2 to 30 micrometers.

In Figure 2B, a reproduction of a SEM image (5000x, scale bar is 20 micrometer) of an untreated bean, is seen that an untreated bean seed coat surface is smooth.

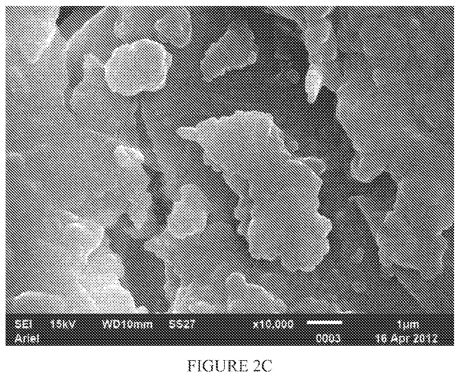

In Figure 2C, a reproduction of a SEM image (10000x, scale bar is 1 micrometer) of an untreated wheat seed, is seen that an untreated wheat seed coat surface is rough, like a lentil seed coat surface.

Droplets of water were placed on the surface of untreated seed coats and the apparent contact angle of the untreated seeds was measured in the usual way using a Ramé-Hart goniometer (model 500), and 10 separate measurements were taken to calculate the mean apparent contact angles for both kinds of seeds. The untreated seeds were found to be hydrophobic.

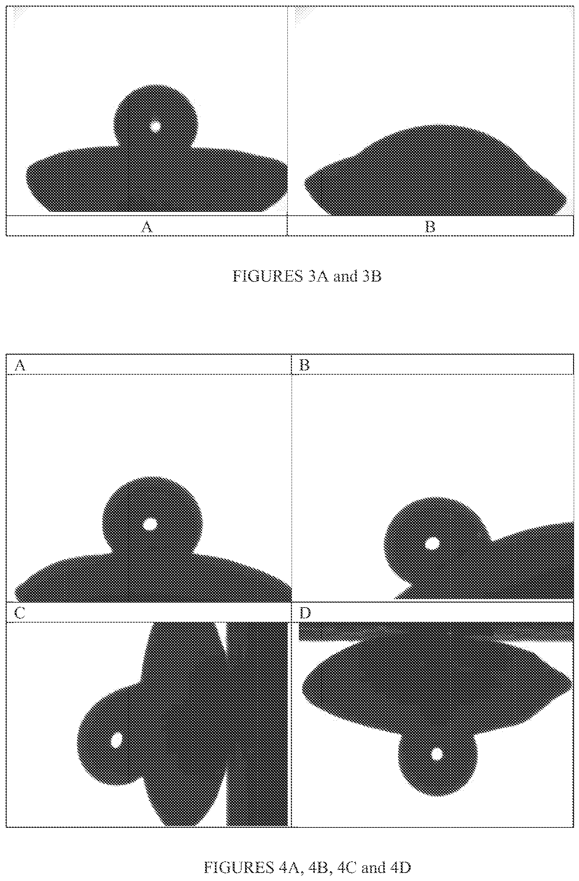

The apparent contact angle of the untreated lentil seed coat surface was determined to be $127 \pm 2°$. In Figure 3A is a reproduction of a photograph showing a droplet of water on the surface of an untreated lentil. Interestingly, the high apparent contact angle observed for the untreated lentil seeds is accompanied by high contact angle hysteresis as seen in Figures 4A, 4B, 4C and 4D. A hydrophobic state that is simultaneously sticky (adhesive) is characteristic of the so-called "rose-petal effect".

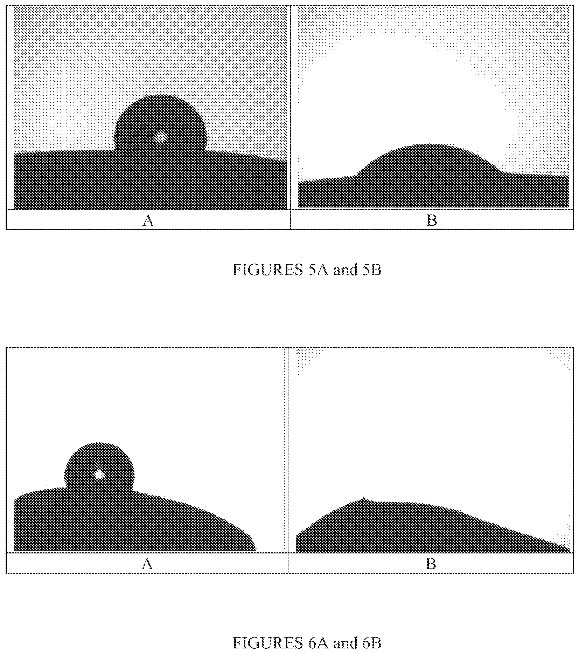

The apparent contact angle of the seed coat surface of untreated beans was determined to be $98 \pm 2°$. In Figure 5A is a reproduction of a photograph showing a droplet of water on the surface of an untreated bean.

The apparent contact angle of the untreated wheat seed coats was determined to be $115 \pm 2°$. In Figure 6A is a reproduction of a photograph showing a droplet of water on the surface of an untreated wheat seed. Like the untreated lentil seeds, in untreated wheat seeds the high apparent contact angle observed is accompanied by high contact angle hysteresis that is simultaneously sticky (adhesive).

*Plasma treatment*

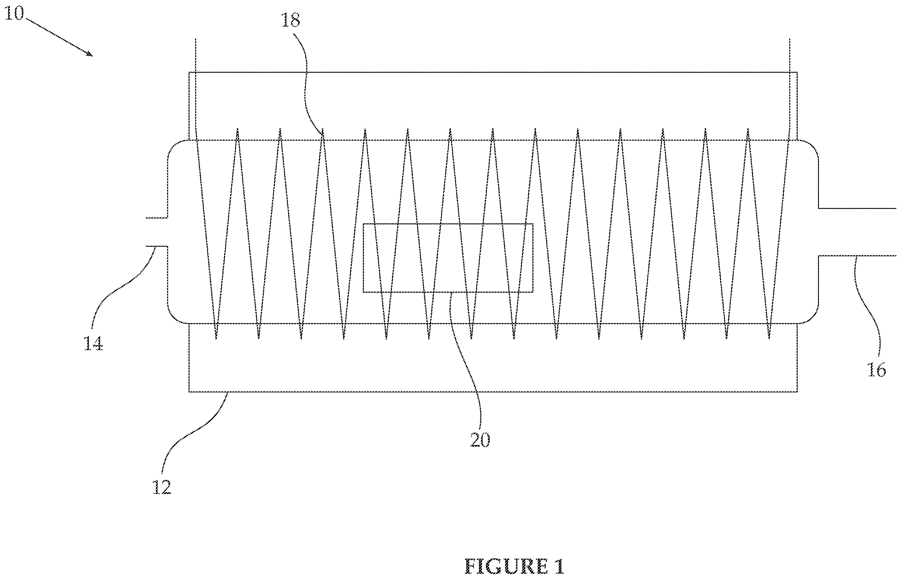

A cylindrical inductively-coupled plasma device (PDC-32G by Harrick Plasma, Ithaca. New York, USA) is schematically depicted in Figure 1 as device **10.**

Device **10** has a 7.62 cm (3") diameter by 16.51 cm (6.5") long cylindrical Pyrex chamber **12,** a gas inlet port **14** (1/8" NPT needle valve to qualitatively control gas flow and chamber pressure), a three-way port **16** (1/8" NPT 3-way valve to quickly switch from bleeding in gas, isolating the chamber, and pumping) and a helical electrode **18.** A vacuum pump (PDC-OPD-2 by Harrick Plasma, Ithaca, New York, USA, not depicted) was functionally associated with device **10** through port **16** to allow evacuation of the gaseous content of chamber **12.**

A 50 g sample of untreated seeds **20** was placed in chamber **12.**

Chamber **12** was evacuated using the vacuum pump and then and filled with an atmosphere of ambient air to a final pressure of 1 Pa ($10^{-5}$ bar).

The radiofrequency power source of the device was activated to generate a 18W 10 MHz radiofrequency current for 15 seconds, ionizing components of the gas in chamber 12 to generate plasma therein.

*Seeds treated in accordance with an embodiment of the teachings herein*

The seed coat surfaces of the treated seeds were examined using a scanning electron microscope as described above. No difference was apparent between the treated seeds and the respective untreated seeds depicted in Figures 2A, 2B and 2C.

Droplets of water were placed on the seed coat surface of treated seeds and the apparent contact angle of the treated seeds was described above. The treated seeds were found to be hydrophilic.

The apparent contact angle of the seed coat surface of treated lentils was determined to be $20\pm1°$. In Figure 3B is a reproduction of a photograph showing a droplet of water on the surface of the seed coat of a treated lentil.

The apparent contact angle of the seed coat surface of treated beans was determined to be $53\pm2°$. In Figure 5B is a reproduction of a photograph showing a droplet of water on the surface of the seed coat of a treated bean.

The apparent contact angle of the seed coat surface of treated wheat seeds was determined to be 0°. In Figure 6B is a reproduction of a photograph showing a droplet of water on the surface of the seed coat of a treated wheat seed.

Untreated seeds of all three types were placed in chamber **12** of the plasma treatment device **10.** Chamber **12** was evacuated, filled with ambient air at 1 Pa ($10^5$ bar) and the seeds held in the low pressure without exposure to plasma for a time equivalent to the time that the treated seeds were held in chamber **12.** The apparent contact angle of the seed coat surfaces was measured and found to be identical to that previously determined for the untreated seeds.

*No Hydrophobic recovery*

Treated seeds were stored in a closed jar (glass jar with metal screw lid). After a week of storage, the apparent contact angle of the seed coat surfaces was measured again and found to be identical to the above. No hydrophobic recovery was observed.

*Water absorption*

To study the effect of the treatment in accordance with the teachings herein on water absorption, 48 seeds each of untreated lentils, treated lentils, untreated beans, treated beans, untreated wheat seeds and treated wheat seeds were maintained in moistened cotton batting at ambient conditions. Using an MRC ASB-220-C2 analytical balance, the beans were weighed every twenty-four hours (over a period of five days) while the lentils and wheat seeds were weighed every thirty minutes (over a period of 7 hours).

The relative water absorption was defined as:

$$\frac{\Delta m(t)}{m_0}100\% = \frac{m(t)-m_0}{m_0}100\%$$

where $m_0$ was the total initial mass of 48 seeds of one type, and m(t) was the total mass of seeds at time t.

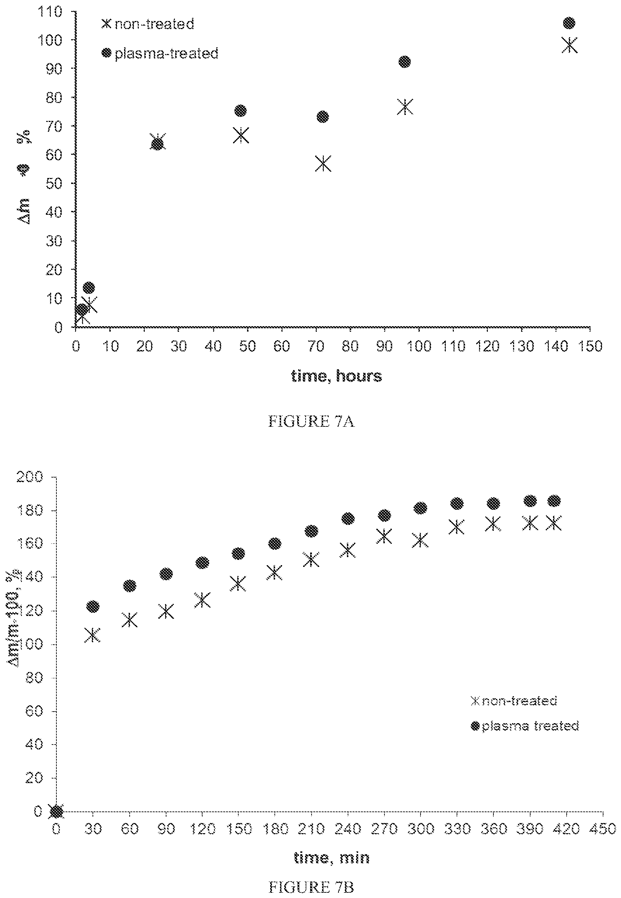

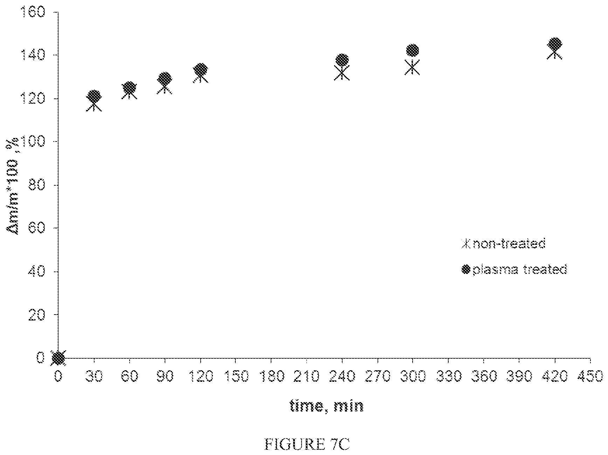

Results are shown in the graphs depicted in Figure 7A (treated and untreated beans over 5 days), in Figure 7B (treated and untreated lentils over seven hours) and in Figure 7C (treated and untreated wheat seeds over seven hours), showing the time-dependence of the average water absorption normalized by the initial mass of seeds.

From Figure 7A it is seen that over the period of 5 days, treated beans absorb more water than do untreated beans.

From Figure 7B it is seen that over the period of 7 hours, treated lentils absorb more water than do untreated lentils.

From Figure 7C it is seen that over the period of 7 hours, treated wheat seeds absorb more water than do untreated lentils.

*Germination*

To study the effect of the treatment in accordance with the teachings herein on germination, 48 seeds each of untreated lentils, treated lentils, untreated beans, treated beans, untreated wheat seeds and treated wheat seeds were maintained in moistened cotton batting at ambient conditions, each seed in an own cell in a germination tray. The seeds were observed. Germination was considered to occur when a distinct sprout was seen.

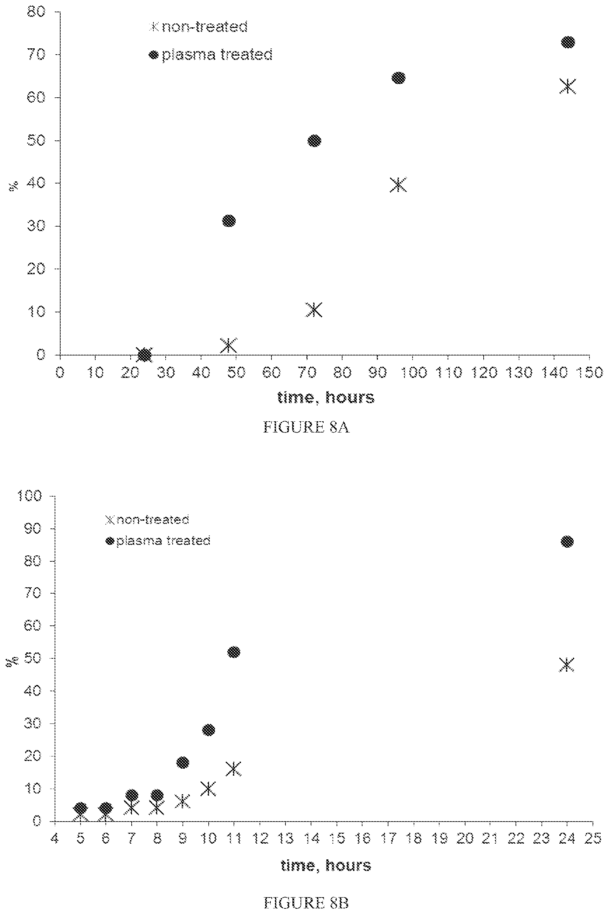

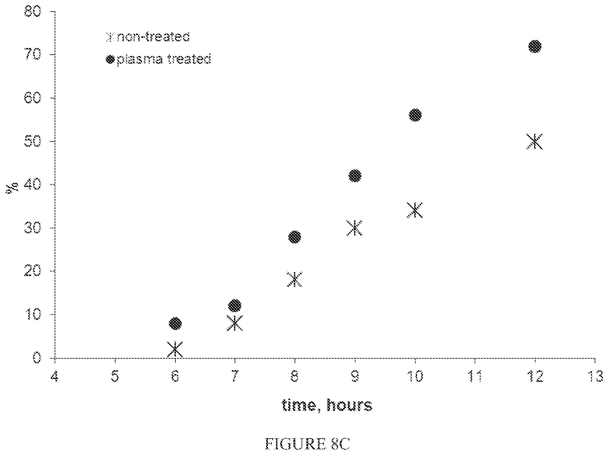

Results are shown in the graphs depicted in Figure 8A (treated and untreated beans over 6 days), in Figure 8B (treated and untreated lentils over a day) and in Figure 8C (treated and untreated wheat seeds over 12 hours)

From Figures 8 it is seen that for all three seed-types, treatment in accordance with the teachings herein provided a marked acceleration of germination and an increase in germination rate.

*Mechanism*

Although not wishing to be bound to any one theory, the Inventors hypothesize that treatment of seeds in accordance with some embodiments of the teachings herein increase the oxygen content on the seed surface, thereby increasing hydrophilicity thereof.

Although not wishing to be bound to any one theory, the Inventors hypothesize that treatment of seeds in accordance with some embodiments of the teachings herein increases the nitrogen content on the seed surface, thereby increasing available nutrients for the sprout that increases germination rate.

Although not wishing to be bound to any one theory, the Inventors hypothesize that treatment of seeds in accordance with some embodiments of the teachings herein etches the seed surface in a way that reduces the apparent contact angle of the seed surface, reducing the hydrophobicity of the seed surface.

*Pressure of Plasma Treatment*

The above experiment is repeated where the pressure in the chamber during plasma treatment is 0.8 Pa, 2, 3, 5 and 7.5 Pa. The seeds treated at the various pressures are found to have substantially the same properties as the treated seeds described above.

*Duration of Plasma Treatment*

The above experiments are repeated where the power source generating the radiofrequency field is activated for 30 seconds, 1 minute, and 2 minutes. The seeds treated for 30 seconds and longer are found to have substantially the same properties as the seeds treated for 15 seconds as described above.

*Different Plasmas*

The above experiments were repeated for lentil, bean and wheat seeds where the atmosphere in the plasma chamber during treatment is substantially pure nitrogen gas ($N_2$) or substantially pure oxygen gas ($O_2$). The seeds treated with such atmospheres were found to have substantially the same properties as the seeds treated with air plasma as described above..

The above experiments are repeated where the atmosphere in the plasma chamber during treatment is neon, argon, helium or mixtures thereof and, depending on the embodiments, including a molar percent of oxygen of not less than 0.1%, not less than 1%, not less than 5%, not less than 10% and even not less than 20% oxygen. The seeds treated with such atmospheres are found to have substantially the same properties as the seeds treated with air plasma as described above.

*Sarcopoterium spinosum*

*Sarcopoterium spinosum,* also known as thorny burnet and *Poterium spinosum,* is an abundant and characteristic species of the Eastern Mediterranean. *S. spinosum* is a chamaephyte of the Rosacea family. The natural germination rate of *S. spinosum* seeds is extremely low.

Seeds of naturally-occuring *S. spinosum* were gathered from fields bordering an urban area in Samaria from a large number of plants.

The gathered seeds were divided into five groups:

a) seeds of group I and V were not treated with plasma;

b) seeds of group II were placed in the plasma-generating device described above, and treated with plasma generated with an 18W 10 MHz radiofrequency field in an atmosphere of air at a pressure of 1 Pa for 1 minute; and

c) seeds of group III and IV were placed in the plasma-generating device described above, and treated with plasma generated with an 18W 10 MHz radiofrequency field in an atmosphere of air at a pressure of 1 Pa for 2 minutes.

Each one of the five groups was divided into four batches of 117 seeds, and each one of the 20 batches was sown in a separate delineated area of soil on 30 November 2012 in an open area in Samaria protected from grazing animals.

The soil in which batches of groups I, II and III were sown was manually watered immediately after sowing. The soil in which batches of groups IV and V were sown was not watered.

The number of *S. spinosum* plants that sprouted was counted on 1 December 2013, 1 month subsequent to sowing. The results are presented in Table 1.

**Table 1**

| Group | treatment | average sprouts for four batches | standard deviation | germination rate (average of four batches) |
|-------|-----------|----------------------------------|--------------------|--------------------------------------------|
| I | no plasma water | 7.5 | 1.1 | 6.4% |
| II | 1 min plasma water | 7.5 | 3.16 | 6.4% |
| III | 2 min plasma water | 9 | 1.56 | 7.7% |
| IV | 2 min plasma no water | 11.5 | 2.04 | 9.8% |
| V | no plasma no water | 8 | 1.85 | 6.8% |

It is seen that plasma treatment in accordance with the teachings herein increases the germination rate of seeds of *S. spinosum.*

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

Citation or identification of any reference in this application shall not be construed as an admission that such reference is available as prior art to the invention.

**Claims**

**1.** A method of treating plant seeds (20) comprising:

providing a plant seed (20) having a seed coat with an outer surface having a natural water apparent contact angle; and

exposing said plant seed (20) to an inductively-coupled plasma under conditions effective to substantially reduce the water apparent contact angle of said seed coat surface from said natural water apparent contact angle to a treated water apparent contact angle, wherein said water apparent contact angle is reduced by not less than about 10°, and

wherein said seed (20) is exposed to said plasma in a chamber (12) including an atmosphere from which said plasma is generated, wherein a pressure of said atmosphere in said chamber (12) is not more than 10 Pa, and said seed (20) is exposed to said plasma for not more than 2 minutes.

2. The method of claim 1, wherein said exposing of said plant seed to said plasma is such that said treated water apparent contact angle is less than 90°.

3. The method of claim 2, wherein said natural water apparent contact angle is greater than 90°.

4. The method of any one of claims 1 to 3, wherein said plasma comprises a cold radiofrequency plasma.

5. The method of any one of claims 1 to 4, wherein said seed is exposed to said plasma for not less than about 1 second.

6. The method of any one of claims 1 to 5, wherein a weight percent of organic carbon in said atmosphere is not more than about 70%.

7. The method of any one of claims 1 to 6, wherein said atmosphere comprises a gas selected from the group of gases consisting of air, oxygen, nitrogen, argon and neon and mixtures thereof.

8. The method of any one of claims 1 to 7, further comprising, subsequent to said exposure to plasma, contacting said seed with water.

9. The method of claim 8, further comprising germinating and planting said seed.

10. The method of any one of claims 1 to 9, wherein said plant seed is of a legume.

11. The method of claim 10, wherein said legume is selected from the group consisting of alfalfa, carobs, chickpea (*Cicer arietinum*), clovers, fenugreek, lupins, mung beans, peas (*Pisum sativum*), soybeans *(Glycine max)* and vetches,

12. The method of claim 10, wherein said seed is a lentil seed.

**Patentansprüche**

1. Verfahren zur Behandlung von Pflanzensamen (20), umfassend:

Bereitstellen eines Pflanzensamens (20), der eine Samenbeschichtung mit einer äußeren Oberfläche aufweist, die einen scheinbaren Randwinkel mit natürlichem Wasser aufweist; und

Aussetzen des Pflanzensamens (20) eines induktiv gekoppelten Plasmas unter Bedingungen, die wirksam sind, um im Wesentlichen den scheinbaren Randwinkel mit Wasser der Samenbeschichtung von dem scheinbaren Randwinkel mit natürlichem Wasser zu einem scheinbaren Randwinkel mit behandeltem Wassser zu reduzieren; wobei der scheinbare Randwinkel mit Wasser um nicht weniger als etwa 10° reduziert wird, und

wobei der Samen (20) dem Plasma in einer Kammer (12) ausgesetzt wird, die eine Atmosphäre enthält, aus der das Plasma erzeugt wird, wobei ein Druck der Atmosphäre in der Kammer (12) bei nicht mehr als 10 Pa liegt und der Samen (20) dem Plasma für nicht länger als 2 Minuten ausgesetzt wird.

2. Verfahren nach Anspruch 1, wobei der Pflanzensamen dem Plasma derart ausgesetzt ist, dass der scheinbare Randwinkel mit behandeltem Wasser weniger als 90° beträgt.

3. Verfahren nach Anspruch 2, wobei der scheinbare Randwinkel mit natürlichem Wasser größer als 90° ist.

4. Verfahren nach einem der Ansprüche 1 bis 3, wobei das Plasma ein kaltes Radiofrequenz-Plasma umfasst.

**5.** Verfahren nach einem der Ansprüche 1 bis 4, wobei der Samen dem Plasma für nicht länger als 1 Sekunde ausgesetzt wird.

**6.** Verfahren nach einem der Ansprüche 1 bis 5, wobei ein Gewichtsprozent von organischem Kohlenstoff in der Atmosphäre nicht mehr als etwa 70 % beträgt.

**7.** Verfahren nach einem der Ansprüche 1 bis 6, wobei die Atmosphäre ein Gas ausgewählt aus der Gruppe von Gasen bestehend aus Luft, Sauerstoff, Stickstoff, Argon und Neon und Mischungen davon umfasst.

**8.** Verfahren nach einem der Ansprüch 1 bis 7, ferner umfassend das Inkontaktbringen des Samens mit Wasser, nach dem Aussetzen des Plasmas.

**9.** Verfahren nach Anspruch 8, ferner umfassend das Keimen und Anpflanzen des Samens.

**10.** Verfahren nach einem der Ansprüche 1 bis 9, wobei der Pflanzensamen von einer Hülsenfrucht ist.

**11.** Verfahren nach Anspruch 10, wobei die Hülsenfrucht aus der Gruppe bestehend aus Alfalfa, Johannesbrotbaum, Kichererbse *(Cicer arietinum)*, Klee, Bockshornklee, Lupinen, Mungobohnen, Erbsen (*Pisurn sativum*)*,* Sojabohnen *(Glycine max)* und Wicken ausgewählt wird.

**12.** Verfahren nach Anspruch 10, wobei der Samen ein Linsensamen ist.


## Revendications

**1.** Procédé de traitement de semences (20) de plante comprenant :

l'obtention d'une semence (20) de plante possédant un tégument avec une surface externe possédant un angle de contact apparent avec l'eau naturel ; et
l'exposition de ladite semence (20) de plante à un plasma à couplage inductif dans des conditions effectives pour réduire sensiblement l'angle de contact apparent avec l'eau de ladite surface de tégument dudit angle de contact apparent avec l'eau naturel à un angle de contact apparent avec l'eau traité, ledit angle de contact apparent avec l'eau étant réduit d'au moins environ 10°, et
ladite semence (20) étant exposée audit plasma dans une chambre (12) comprenant une atmosphère à partir de laquelle ledit plasma est généré, une pression de ladite atmosphère dans ladite chambre (12) étant inférieure ou égale à 10 Pa et ladite semence (20) étant exposée audit plasma pendant une durée inférieure ou égale à 2 minutes.

**2.** Procédé selon la revendication 1, ladite exposition de ladite semence de plante audit plasma étant telle que ledit angle de contact apparent avec l'eau traité est inférieur à 90°.

**3.** Procédé selon la revendication 2, ledit angle de contact apparent avec l'eau naturel étant supérieur à 90°.

**4.** Procédé selon l'une quelconque des revendications 1 à 3, ledit plasma comprenant un plasma froid radiofréquence.

**5.** Procédé selon l'une quelconque des revendications 1 à 4, ladite semence étant exposée audit plasma pendant une durée supérieure ou égale à environ 1 seconde.

**6.** Procédé selon l'une quelconque des revendications 1 à 5, un pourcentage en poids de carbone organique dans ladite atmosphère étant inférieur ou égal à environ 70 %.

**7.** Procédé selon l'une quelconque des revendications 1 à 6, ladite atmosphère comprenant un gaz choisi dans le groupe de gaz constitué par l'air, l'oxygène, l'azote, l'argon et le néon et des mélanges de ceux-ci.

**8.** Procédé selon l'une quelconque des revendications 1 à 7, comprenant en outre, suite à ladite exposition au plasma, la mise en contact de ladite semence avec de l'eau.

**9.** Procédé selon la revendication 8, comprenant en outre la germination et la plantation de ladite semence.

**10.** Procédé selon l'une quelconque des revendications 1 à 9, ladite semence de plante étant celle d'une légumineuse.

**11.** Procédé selon la revendication 10, ladite légumineuse étant choisie dans le groupe constitué par la luzerne, les caroubes, le pois chiche (*Cicer arietinum*), les trèfles, le fenugrec, les lupins, les haricots mungo, les pois (*Pisurn sativum*), les sojas *(Glycine max)* et les vesces.

**12.** Procédé selon la revendication 10, ladite semence étant une semence de lentille.

FIGURE 1

FIGURE 2A

FIGURE 2B

FIGURE 2C

FIGURES 3A and 3B

FIGURES 4A, 4B, 4C and 4D

FIGURES 5A and 5B

FIGURES 6A and 6B

FIGURE 7A

FIGURE 7B

FIGURE 7C

FIGURE 8A

FIGURE 8B

FIGURE 8C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61636752 A
- US 5281315 A
- US 6543460 B
- WO 2007124945 A
- US 61636752 B

**Non-patent literature cited in the description**

- **VOLIN JC ; DENES FS ; YOUNG RA.** Modification of seed germination performance through cold plasma chemistry technology. *Crop. Sci.,* 2000, vol. 40, 1706-1718
- **SELCUK M ; OKSUZ L ; BASARAN P.** Decontamination of grains and legumes infected with Aspergillus spp. and Penicillum spp. by cold plasma treatment. *Bioresource Technology,* 2008, vol. 99, 5104-5109
- **CHU PK ; CHEN JY ; WANG LP ; HUANG N.** Plasma-surface modification of biomaterials. *Mat Sci and Eng,* 2002, vol. 36, 143-206